# EUROPEAN PATENT SPECIFICATION

(11) **EP 4 528 907 B1**
(45) Date of publication and mention of the grant of the patent: **11.02.2026**
(21) Application number: 24184182.4
(22) Date of filing: 25.06.2024
(51) Int. Cl.: H01M 50/474, H01M 50/477, H01M 50/528, H01M 50/533, H01M 50/536, H01M 50/586, H01M 50/595

(54) **SECONDARY BATTERY**
SEKUNDÄRBATTERIE
BATTERIE SECONDAIRE

(30) Priority: 12.09.2023 KR 20230121023
(43) Date of publication of application: 26.03.2025
(73) Proprietor: Samsung SDI Co., Ltd., Yongin-si, Gyeonggi-do 17084 (KR)
(72) Inventor: KIM, Sang Hyun, 17084 Yongin-si (KR); AHN, Jeong Chull, 17084 Yongin-si (KR); SEINO, Hiroshi, 17084 Yongin-si (KR); HONG, Sun Yang, 17084 Yongin-si (KR)
(74) Representative: Marks & Clerk LLP

(56) References cited:
- JP-A- 2004 303 590
- JP-A- 2006 302 509
- US-A1- 2021 265 708

## Description

### BACKGROUND

### 1. Field

The present disclosure relates to a secondary battery.

### 2. Description of the Related Art

Unlike a primary battery that cannot be recharged, a secondary battery is a battery that can be charged and discharged. Low-capacity secondary batteries packaged in the form of a pack including a single battery cell are widely employed in portable, small-sized electronic devices such as cellular phones or camcorders. In some implementations, large-capacity secondary batteries packaged in forms of battery packs including tens of battery cells connected to one another are widely used for driving motors of hybrid vehicles, etc.

Secondary batteries are manufactured in various shapes, and typical shapes thereof include pouch, cylindrical, and square shapes. A secondary battery is constructed by incorporating an electrode assembly formed by interposing an insulating separator between positive and negative electrode plates, and an electrolyte into a case.

Specifically, in some cylindrical secondary batteries, depending on the condition of a jelly roll and the thickness of an electrode tab, pressure may be applied to a substrate at the edge portion of the electrode tab. Stress caused by the pressure may cause cracks to occur along the boundary area of the electrode tab, and in severe cases, may even cause a rupture.

JP 2004 303590 A describes a laminated battery having a laminate envelope and a flatly wound electrode body formed by arranging a separator between a positive electrode on which a positive electrode mixture containing positive electrode activator storing and releasing lithium ion is painted, having a positive electrode tab on a metallic core foil, and a negative electrode on which a negative electrode mixture containing negative electrode activator storing and releasing lithium ion is painted, having a negative electrode tab on the metallic core foil, and winding and crushing the positive electrode and the negative electrode in a state of being insulated from each other by the separator. A part where the positive electrode mixture is not painted is arranged in the vicinity of the back and front side of the central part in longitudinal direction of the positive electrode. The positive electrode tab is welded on one surface on which the positive electrode mixture is not painted, and exposed surface is covered by an insulation tape, and the other surface of not painted part is covered by a protection tape. The inside of the flatly wound electrode is formed so as not to generate any bumpy part.

JP 2006 302509 A describes a spiral electrode group mounted inside an armour casing, a positive electrode plate, in which an active material is applied to both faces of long metal foil, and a negative electrode plate, in which an active material is applied to both faces of long metal foil, are wound up face to face via a separator. An uncoated part, on which the active material is not applied, is formed in the longitudinal intermediate part in the positive electrode plate, and the current collection tab is connected to the uncoated part, while an insulting tape is stuck to cover the uncoated part and the current collection tab. A ratio of the surface roughness of the insulation tape to the surface roughness of the positive electrode plate ranges from 0.5 to 1.5.

US 2021/265708 A1 describes an electrode assembly including a positive electrode sheet having a positive electrode active material portion that is an area on which a positive electrode active material is stacked on a positive electrode collector and a positive electrode non-coating portion, a positive electrode tab disposed on the positive electrode non-coating portion, a negative electrode sheet having a negative electrode active material portion that is an area on which a negative electrode active material is stacked on a negative electrode collector and a negative electrode non-coating portion; a negative electrode tab disposed on the negative electrode non-coating portion, and a separator insulating the positive electrode sheet and the negative electrode sheet from each other. The positive electrode non-coating portion includes a first positive electrode non-coating portion and a second positive electrode non-coating portion, which are provided on two portions spaced apart from each other on the positive electrode sheet.

### SUMMARY

The present disclosure provides a secondary battery capable of compensating for pressure applied to an electrode tab by attaching a tape having the same thickness (or thickness level) as the electrode tab to an electrode uncoated portion (e.g., a portion of the electrode not coated with an active material) around the electrode tab.

A secondary battery, according to an embodiment of the present disclosure, includes: a first electrode plate including a first substrate having a first active material coated portion coated with a first active material and a first electrode uncoated portion not coated with the first active material; a second electrode plate including on a second substrate having a second active material coated portion coated with a second active material and a second electrode uncoated portion not coated with the second active material; a separator between (e.g. disposed between) the first electrode plate and the second electrode plate; an electrode tab connected to one of the first electrode uncoated portion and the second electrode uncoated portion; an insulation tape on (e.g. formed on) the first electrode uncoated portion or the second electrode uncoated portion and covering the electrode tab; and a step compensation unit on (e.g. formed on) a region of an upper surface of the insulation tape, excluding a region corresponding to the electrode tab.

The step compensation unit may include first step compensation units at (e.g. formed at) both ends of the insulation tape at the upper surface of the insulation tape.

The step compensation unit may further include a second step compensation unit on (e.g. formed on) a region of the insulation tape between the first step compensation units and that does not correspond to the electrode tab.

The first step compensation units may be connected to each other with the second step compensation unit therebetween (e.g. interposed therebetween).

A width of the step compensation unit may extend from one end of the electrode tab to one end of the insulation tape.

The insulation tape may be on (e.g. formed on) the upper surface of the first electrode plate to cover the electrode tab, the first electrode uncoated portion, and a portion of the first active material coated portion, or may be on (e.g. formed on) the upper surface of the second electrode plate to cover the electrode tab, the second electrode uncoated portion, and a portion of the second active material coated portion.

A thickness T₂ of the step compensation unit may be in a range of 0.1*T₁ ≤ T₂ ≤ 1.5*T₁, where T₁ is a thickness of the electrode tab.

When a thickness of a first layer including the first substrate, the first active material coated portion, and the insulation tape, is different from a thickness of a second layer including the first substrate, the electrode tab, and the insulation tape, the step compensation unit may have (e.g. may be formed to have) a thickness that gradually decreases or increases in a direction from the first layer to the second layer; or in when a thickness of a third layer including the second substrate, the second active material coated portion, and the insulation tape, is different from a thickness of a fourth layer including the second substrate, the electrode tab, and the insulation tape, the step compensation unit may have (e.g. may be formed to have) a thickness that gradually decreases or increases in a direction from the third layer to the fourth layer.

The insulation tape may be additionally formed and/or arranged in the same shape on a lower surface opposite to the upper surface, of the first electrode uncoated portion or the second electrode uncoated portion to which the electrode tab is connected, at a position corresponding to the upper surface; and the step compensation unit may be additionally formed and/or arranged in the same shape on a lower surface of the first electrode uncoated portion or the second electrode uncoated portion, at a position corresponding to the upper surface.

A total thickness (T₂ + T₃) of the step compensation unit may be in a range of 0.1*T₁ ≤ T₂ + T₃ ≤ 1.5*T₁, where T₁ is a thickness of the electrode tab, T₂ is a thickness of the step compensation unit on (e.g. formed on) the upper surface of the first electrode uncoated portion or the second electrode uncoated portion, and T₃ is a thickness of the step compensation unit on (e.g. formed on) the lower surface of the first electrode uncoated portion or the second electrode uncoated portion.

The step compensation unit may include an adhesive tape including a film and an adhesive layer on (e.g. formed-on) a lower surface of the film.

The film may include polyimide, polyethylene terephthalate, or polypropylene, and the adhesive layer may include at least one of an acrylic compound, a rubber compound, or a hydrocarbon resin compound.

At least some of the above and other features of the invention are set out in the claims.

### BRIEF DESCRIPTION OF THE DRAWINGS

FIGS. 1, 2, and 3 are a perspective view, an exploded perspective view, and a cross-sectional view, respectively, of a secondary battery according to an embodiment of the present disclosure.
FIG. 4 is a cross-sectional view of a step compensation unit formed on an upper portion of a first electrode plate according to an embodiment of the present disclosure.
FIG. 5 is a plan view showing a width and length range of the step compensation unit shown in FIG. 4.
FIG. 6 is a cross-sectional view of an embodiment in which the step compensation unit formed on the first electrode plate has different thicknesses.
FIG. 7 is a cross-sectional view of a step compensation unit formed on the upper and lower portions of a first electrode plate according to an embodiment of the present disclosure.
FIG. 8 is a diagram showing the cross-sectional configuration of a step compensation unit according to an embodiment of the present disclosure.
FIG. 9 is a cross-sectional view of a step compensation unit formed on the upper portion of a second electrode plate according to an embodiment of the present disclosure.
FIG. 10 is a plan view of a width and length range of the step compensation unit shown in FIG. 9.
FIG. 11 is a cross-sectional view of an embodiment in which the step compensation unit formed on the second electrode plate has different thicknesses.
FIG. 12 is a cross-sectional view of a step compensation unit formed on the top and bottom of the second electrode plate according to an embodiment of the present disclosure.

### DETAILED DESCRIPTION

Examples and/or embodiments of the present disclosure are provided to more completely explain the present disclosure to those skilled in the art, and the following embodiments may be modified in various other forms. The present disclosure, however, may be embodied in many different forms and should not be construed as being limited to the embodiments set forth herein. Rather, these embodiments are provided so that this disclosure will be thorough and complete and will convey the aspects and features of the present disclosure to those skilled in the art.

In some embodiments, in the accompanying drawings, sizes or thicknesses of various components are exaggerated for clarity. Like numbers refer to like elements-throughout. As used herein, the term "and/or" includes any and all combinations of one or more of the associated listed items. In some embodiments, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or ad one or more other features, numbers, steps, operations, elements, components, and/or groups thereof.

It will be understood that, although the terms first, second, etc. may be used herein to describe various elements, regions, layers, and/or sections, these elements, regions, layers, and/or sections should not be limited by these terms. These terms are only-used to distinguish one member, element, region, layer and/or section from another. Thus, for example, a first member, a first element, a first, region, a first layer and/or a first-section discussed below could be termed a second member, a second element, a second, region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" or "over" the other elements or features. Thus, the term "below" may encompass both an orientation of above and below.

Hereinafter, a secondary battery 100 according to embodiments of the present disclosure will be described in detail with reference to the accompanying drawings.

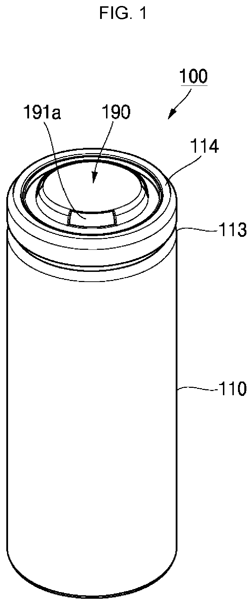

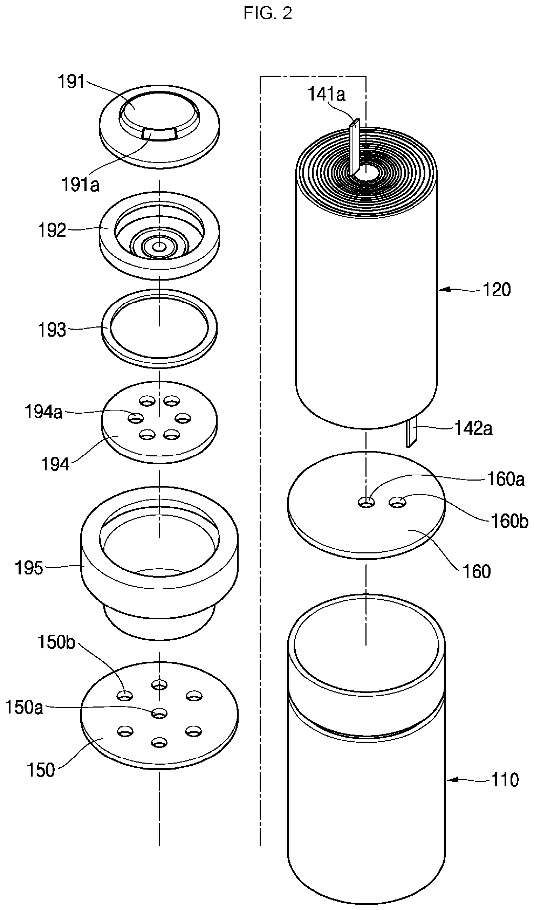

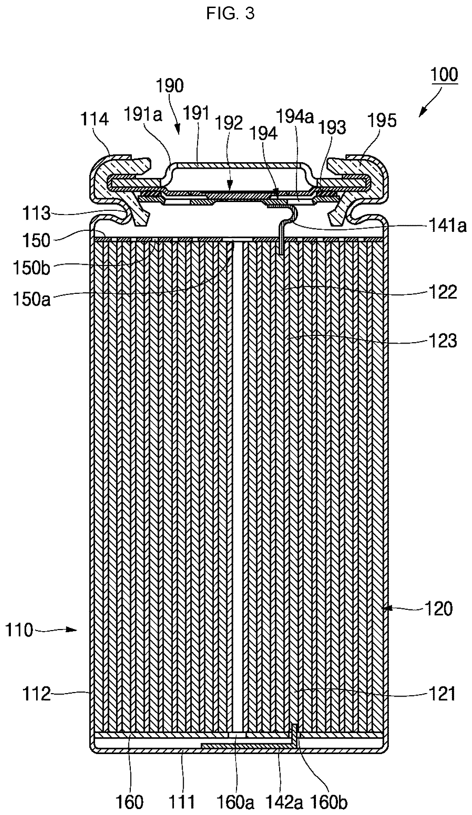

FIGS. 1, 2, and 3 are a perspective view, an exploded perspective view, and a cross-sectional view, respectively, of a secondary battery according to an embodiment of the present disclosure.

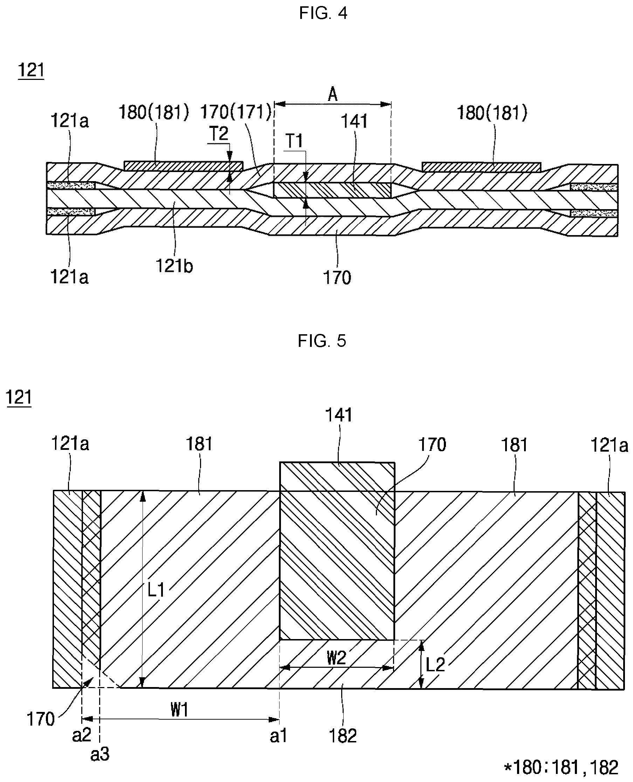

Referring to FIGS. 1, 2, and 3, a secondary battery 100, according to an embodiment of the present disclosure, may include a cylindrical can 110, a cylindrical electrode assembly 120, a separator 123, an upper insulating plate 150, a lower insulating plate 160, and a cap assembly 190, and, referring to FIGS. 4 to 12, may further include an insulation tape 170 and a step compensation unit 180.

The can 110 may have a circular bottom portion 111 and a cylindrical side portion 112 extending a length (e.g., a certain length) upwardly from the bottom portion 111. During the manufacturing process of the secondary battery 100, the top portion (or top end) of the cylindrical can 110 may be open. Therefore, during the assembly process of the secondary battery 100, the electrode assembly 120 may be inserted into the cylindrical can 110 together with an electrolyte through the open portion (or open end).

The cylindrical can 110 may include (or may be formed of) steel, a steel alloy, aluminum, an aluminum alloy, or equivalents thereof. In the illustrated embodiment, the can may include or may be referred to as a case or a housing. In the illustrated embodiment, to prevent the electrode assembly 120 and the cap assembly 190 from being separated to the outside, the cylindrical can 110 may have a beading part (e.g., a bead) 113 that is inwardly recessed at the lower portion of (e.g., below) the cap assembly 190 and a crimping part (e.g., a crimped end) 114 that is inwardly bent at the upper portion of (e.g., above) the cap assembly 190 .

The electrode assembly 120 may be accommodated inside the cylindrical can 110. The electrode assembly 120 may include a first electrode plate 121, a second electrode plate 122, and the separator 123. In the illustrated embodiment, the first electrode plate 121 may be a positive electrode plate, and the second electrode plate 122 may be a negative electrode plate. In other embodiments, however, the opposite is possible. Hereinafter, for convenience of explanation, an embodiment in which the first electrode plate 121 is a positive electrode plate and the second electrode plate 122 is a negative electrode plate will be described.

The electrode assembly 120 may include a positive electrode plate 121 having a first active material coated portion 121a coated with a positive electrode active material (e.g., a transition metal oxide, such as LiCoO₂, LiNiO₂, LiMn₂O₄, etc.), a negative electrode plate 122 having a second active material coated portion 122a coated with a negative electrode active material (e.g., graphite, carbon, etc.), and the separator 123 located between the positive electrode plate 121 and the negative electrode plate 122 to prevent short circuits while allowing movement of lithium ions. Hereinafter, for convenience of explanation, the first active material coated portion 121a and the second active material coated portion 122a will be described as the positive electrode active material coated portion 121a and the negative electrode active material coated portion 122a, respectively.

The positive electrode plate 121, the negative electrode plate 122, and the separator 123 may be wound into a substantially cylindrical shape. In the illustrated embodiment, the positive electrode plate 121 may include an aluminum (Al) foil, the negative electrode plate 122 may include a copper (Cu) or nickel (Ni) foil, and the separator 123 may include polyethylene (PE) or polypropylene (PP).

As described above, the positive electrode plate 121 may be a plate-shaped metal foil made of aluminum (Al) and coated with a positive electrode active material made of a transition metal oxide on at least one surface. The positive electrode plate 121 may have, at the upper end, a first electrode uncoated portion 121b that is not coated with the positive electrode active material. The first electrode uncoated portion 121b may protrude upwardly from the electrode assembly 120. For example, the first electrode uncoated portion 121b of the positive electrode plate 121 may protrude further upwardly compared to the negative electrode plate 122 and the separator 123 (e.g., the first electrode uncoated portion 121b of the positive electrode plate 121 may protrude upwardly beyond or above the negative electrode plate 122 and the separator 123).

As described above, the negative electrode plate 122 may be a plateshaped metal foil made of copper (Cu) or nickel (Ni) and coated with a negative electrode active material made of graphite or carbon on at least one surface. The negative electrode plate 122 may have, at the lower end, a second electrode uncoated portion 122b that is not coated with the negative electrode active material. The second electrode uncoated portion 122b may protrude downwardly from the electrode assembly 120. For example, the second electrode uncoated portion 122b of the negative electrode plate 122 may protrude further downwardly compared to the positive electrode plate 121 and the separator 123 (e.g., the second electrode uncoated portion 122b of the negative electrode plate 122 may protrude downwardly beyond or below the positive electrode plate 121 and the separator 123).

The first electrode uncoated portion 121b may be a positive electrode uncoated portion, and the second electrode uncoated portion 122b may be a negative electrode uncoated portion, but, in other embodiments, the opposite is possible. Hereinafter, for convenience of explanation, an embodiment in which the first electrode uncoated portion 121b is a positive electrode uncoated region and the second electrode uncoated portion 122b is a negative electrode uncoated region will be described.

In the illustrated embodiment, the positive electrode uncoated portion 121b of the positive electrode plate 121 may include a first electrode tab 141 protruding upwardly by a length, and the negative electrode uncoated portion 122b of the negative electrode plate 122 may include a second electrode tab 142 protruding downwardly by a length, but in other embodiments, the opposite is also possible.

In the illustrated embodiment, the first electrode tab 141 is cut from the positive electrode uncoated portion 121b and, thus, may include the same material as the positive electrode uncoated portion 121b, for example, aluminum. In some embodiments, the second electrode tab 142 is cut from the negative electrode uncoated portion 122b and, thus, may include the same material as the negative electrode uncoated portion 122b, for example, copper or nickel. The first electrode tab 141 may be a positive electrode tab, and the second electrode tab 142 may be a negative electrode tab. In other embodiments, however, the opposite is possible. Hereinafter, for convenience of explanation, an embodiment in which the first electrode tab 141 is a positive electrode tab and the second electrode tab 142 is a negative electrode tab will be described. The positive electrode tab 141 of the electrode assembly 120 may be connected to the cap assembly 190, and the negative electrode tab 142 may be connected to the bottom portion 111 of the cylindrical can 110. The positive electrode tab 141 and the cap assembly 190 at the upper side may be electrically connected by a first lead tab 141a welded to the positive electrode tab 141. In some embodiments, negative electrode tab 142 and the bottom portion 111 may be electrically connected to the second lead tab 142a welded to the negative electrode tab 142. In some embodiments, the positive electrode tab 141 and the cap assembly 190 may be connected by the first lead tab 141a, and the negative electrode tab 142 and the bottom portion 111 may be directly connected without a separate lead tab, but in other embodiments, the opposite is possible.

The electrode assembly 120 may be referred to as an electrode group or an electrode. In the illustrated embodiment, as described above, the negative electrode tab 142 of the electrode assembly 120 may be welded to the bottom portion 111 of the cylindrical can 110 or may be connected to the second lead tab 142a. Therefore, the cylindrical can 110 may act as a negative electrode. For example, conversely, the positive electrode tab 141 may be connected to the bottom portion 111 of the cylindrical can 110, and in this embodiment, the cylindrical can 110 may act as a positive electrode.

The upper insulating plate 150 is coupled to the cylindrical can 110 and may have a first hole 150a formed in the center thereof and a plurality of second holes 150b formed outside of (e.g., around) the first hole 150a. In some embodiments, the upper insulating plate 150 may be interposed between the electrode assembly 120 and the cap assembly 190. The upper insulating plate 150 may prevent the electrode assembly 120 from electrically contacting the cap assembly 190. In the illustrated embodiment, the upper insulating plate 150 may prevent the positive electrode plate 121 of the electrode assembly 120 from electrically contacting the cap assembly 190.

When a large amount of gas is generated due to an abnormality in the secondary battery 100, the first hole 150a may allow the gas to quickly move toward the cap assembly 190. In the illustrated embodiment, the second hole 150b may allow the positive electrode tab 141 or the first lead tab 141a to pass through the upper insulating plate 150 to be welded to the cap assembly 190. In some embodiments, the remaining second holes 150b allow the electrolyte to quickly flow into the electrode assembly 120 during an electrolyte injection process.

The lower insulating plate 160 is coupled to the cylindrical can 110 and may have a first hole 160a at the center thereof and a second hole 160b formed at the outside (e.g., offset from) the first hole 160a. In some embodiments, the lower insulating plate 160 may be interposed between the electrode assembly 120 and the bottom portion 111. The lower insulating plate 160 may prevent the electrode assembly 120 from electrically contacting the bottom portion 111 of the cylindrical can 110. In the illustrated embodiment, the lower insulating plate 160 may prevent the negative electrode plate 122 of the electrode assembly 120 from electrically contacting the bottom portion 111.

When a large amount of gas is generated due to an abnormality in the secondary battery, the first hole 160a may allow the gas to quickly move upwardly (or downwardly). In some embodiments, the second hole 160b may allow the negative electrode tab 142 or the second lead tab 142a to pass through the lower insulating plate 160 to be welded to the bottom portion 111.

The insulation tape 170 may include at least one of a first insulation tape 171 and a second insulation tape 172. In one embodiment, the first insulation tape 171 is attached to a portion of the positive electrode tab 141 of the positive electrode plate 121, and the second insulation tape 172 is attached to a portion of the negative electrode tab 142 of the negative electrode plate 122. A more detailed description of the insulation tape 170 will be provided later.

The cap assembly 190 may include a cap-up 191 having a plurality of through holes (e.g., openings) 191a, a safety vent 192 located below the cap-up 191, and a connection ring 193 and a cap-down 194, both located below the safety vent 192. In the illustrated embodiment, the cap-down 194 is located below the safety vent 192 and the connection ring 193, has a plurality of through holes 194a, and can be electrically connected to the positive electrode tab 141 or the first lead tab 141a. In the illustrated embodiment, the cap assembly 190 may further include an insulation gasket 195 that insulates the cap-up 191, the safety vent 192, and the cap-down 194 from the side portion 112 of the cylindrical can 110. The insulation gasket 195 may be substantially compressed between the beading part 113 and the crimping part 114 formed in the side portion 112 of the cylindrical can 110. In the illustrated embodiment, the through holes 191a in the cap-up 191 and the through holes 194a in the cap-down 194 may discharge internal gas to the outside when abnormal internal pressure occurs inside the cylindrical can 110.

Further, gas causing such abnormal internal pressure passes upwardly through the through holes 194a in the cap-down 194 and inverts the safety vent 192, and thus, the safety vent 192 may be electrically separated from the cap-down 194. Subsequently, the safety vent 192 is torn (e.g., is opened or burst), the internal gas may be released to the outside through the through holes 191a in the cap-up 191.

An electrolyte may be injected into the cylindrical can 110. This allows lithium ions generated by electrochemical reactions to move between the negative electrode plate 122 and the positive electrode plate 121 inside the battery during charging and discharging. The electrolyte may include a non-aqueous organic electrolyte that is a mixture of a lithium salt and a high-purity organic solvent. In some embodiments, the electrolyte may include a polymer or solid electrolyte using a polymer electrolyte.

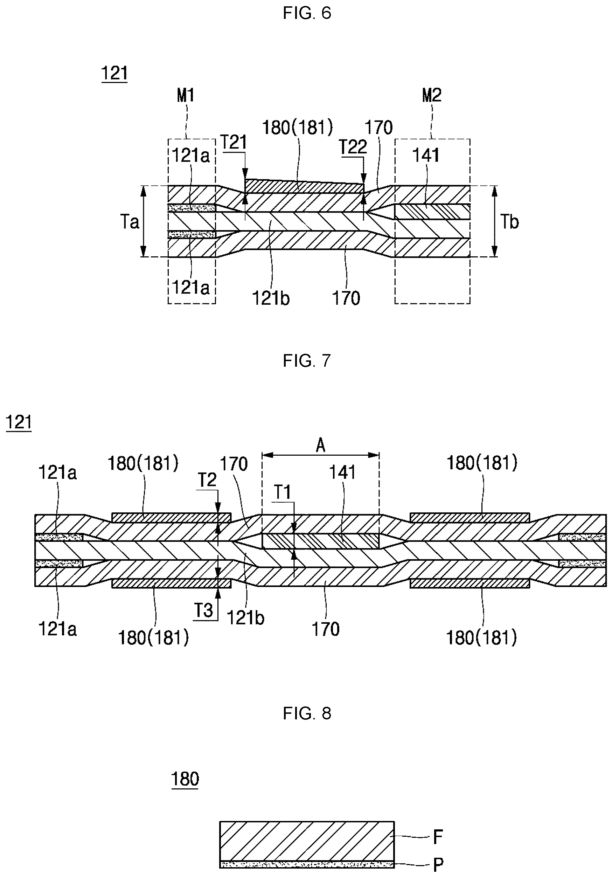

FIG. 4 is a cross-sectional view of a step compensation unit formed on the upper portion of a first electrode plate according to an embodiment of the present disclosure, FIG. 5 is a plan view showing a width and length range of the step compensation unit shown in FIG. 4, FIG. 6 is a cross-sectional of an embodiment in which the step compensation unit formed on the first electrode plate has different thicknesses according to an embodiment of the present disclosure, FIG. 7 is a cross-sectional view of a step compensation unit formed on the upper and lower portions of a first electrode plate according to an embodiment of the present disclosure, and FIG. 8 is a diagram showing the cross-sectional configuration of a step compensation unit according to an embodiment of the present disclosure.

As shown in FIG. 4, the step compensation unit 180 may be formed on a region of (e.g., a portion of) the upper portion of the insulation tape 170 excluding the region corresponding to (or overlapping) the positive electrode tab 141.

For example, the step compensation unit 180 may include first step compensation units 181 and a second step compensation unit 182, as shown in, for example, FIG. 5.

The first step compensation units 181 may be formed at both ends of the insulation tape 170 and on the upper surface of the insulation tape 170. The second step compensation unit 182 may be formed on a region not corresponding to (e.g., offset from) the positive electrode tab 141 and in the region between the first step compensation units 181. Accordingly, in the step compensation unit 180, the first step compensation units 181 formed at both sides of the positive electrode tab 141 and the second step compensation unit 182 connecting (or extending between) the first step compensation units 181 may be integrated (or integrally formed). In such an embodiment, the step compensation unit 180 may have an approximately "U" shape, but-the planar structure of the step compensation unit 180 is not limited to this shape and may be modified into various shapes.

The width (W1) of the first step compensation units 181 may range (or span or extend) from one end a1 of the positive electrode tab 141 to one end a2 of the insulation tape 170. The insulation tape 170 may be formed on the upper surface of the positive electrode plate 121 to cover the positive electrode tab 141, the first electrode uncoated portion 121b, and a portion of the positive electrode active material coated portion 121a. In this way, the width (W1) of the first step compensation units 181 may be limited such that it reaches (or extends to) the one end a2 of the insulation tape 170 while not overlapping the positive electrode tab 141, but the width (W1) of the first step compensation units 181 may be in a range between the ends a3 of the first electrode uncoated portion 121b while not overlapping the positive electrode tab 141. The length (L1) of the first step compensation units 181 is not limited but may be within the range between the upper and lower ends of the insulation tape 170. The width (W2) of the second step compensation unit 182 may be about the width of the positive electrode tab 141, and the length (L2) of the second step compensation unit 182 may be in the range between the lower end of the positive electrode tab 141 and the lower end of the insulation tape 170.

The step compensation unit 180 compensates for the thickness of a relatively thin portion around the positive electrode tab 141 by the positive electrode tab 141 (e.g., the step compensation unit 180 compensates for a relatively thinner portion of the electrode assembly 120 where the non-coated portions and the electrode tabs are not present), and the upper surface of the step compensation unit 180 may be aligned with the upper surface (A) of the insulation tape 170 corresponding to the positive electrode tab 141 but may be relatively lower or higher than the upper surface (A) of the insulation tape 170. For example, the thickness (T2) of the step compensation unit 180 may be in a range of or about 0.1*T1 ≤ T2 ≤ 1.5*T1, as shown in FIG. 4, where T1 is the thickness of the positive electrode tab 141.

When the thickness (T2) of the step compensation unit 180 is excessively thick (exceeding 150% or about 150%) compared to the thickness (T1) of the positive electrode tab 141, cell capacity may be reduced, which may be disadvantageous, and the step compensation unit 180 may impart pressure on a positive electrode substrate. Accordingly, in consideration of the tolerance of the step compensation unit 180, the positive electrode tab 141 may be formed up to 150% or about 150% of the thickness (T1). In some embodiments, when the step compensation unit 180 is thinner than the positive electrode tab 141, there would be no problem, but in order to allow the effect of the step compensation unit 180 to be fully demonstrated, the thickness (T2) of the step compensation unit 180 may be at least 10% or about 10% of the thickness (T1) of the positive electrode tab 141.

As shown in FIG. 6, in the positive electrode plate 121, when the thickness (Ta) of a first layer M1 including a positive electrode substrate, the positive electrode active material coated portion 121a, and the insulation tape 170 is different from the thickness (Tb) of a second layer M2 including a positive electrode substrate, the positive electrode tab 141, and the insulation tape 170, the step compensation unit 180 may be formed to have a thickness that gradually decreases or increases in the direction from the first layer M1 to the second layer M2 so that the cross section thereof may be formed to be inclined.

For example, when the thickness (Ta) of the first layer M1 is greater than the thickness (Tb) of the second layer M2, the step compensation unit 180 may be formed to have a thickness that gradually decreases in the direction from the first layer M1 to the second layer M2. In the step compensation unit 180 shown in FIG. 6, the thickness (T21) of the left portion thereof is greater than the thickness (T22) of the right portion thereof.

Conversely, when the thickness (Ta) of the first layer M1 is smaller than the thickness (Tb) of the second layer M2, the step compensation unit 180 may be formed to have a thickness that gradually increases in the direction from the first layer M1 to the second layer M2. In such an embodiment, the thickness (T21) of the left portion of the step compensation unit 180 may be smaller than the thickness (T22) of the right portion.

In some embodiments, as shown in, for example, FIG. 7, the insulation tape 170 may be additionally formed, in the same shape at its position corresponding to the upper surface, on the lower surface of the first electrode uncoated portion 121b, opposite to the upper surface, to which the positive electrode tab 141 is connected. In such an embodiment, the step compensation unit 180 may also be formed in the same shape on the lower surface of the first electrode uncoated portion 121b at its position corresponding to the upper surface. The total thickness (T2 + T3) of the step compensation unit 180 may be in a range of or about 0.1* T1 ≤ T2 + T3 ≤ 1.5*T1. Here, T1 is the thickness of the positive electrode tab 141, T2 is the thickness of the step compensation unit 180 formed on the upper surface of the first electrode uncoated portion 121b, and T₃ is the thickness of the step compensation unit 180 formed on the lower surface of the first electrode uncoated portion 121b.

The step compensation unit 180 may be an adhesive tape including a film (F) and an adhesive layer (P) formed on the lower surface of the film (F). The film (F) may include a polyimide (PI), polyethylene terephthalate (PET), or polypropylene (PP) material, and the adhesive layer (P) may include an adhesive including at least one of an acrylic compound, a rubber compound, or a hydrocarbon resin compound.

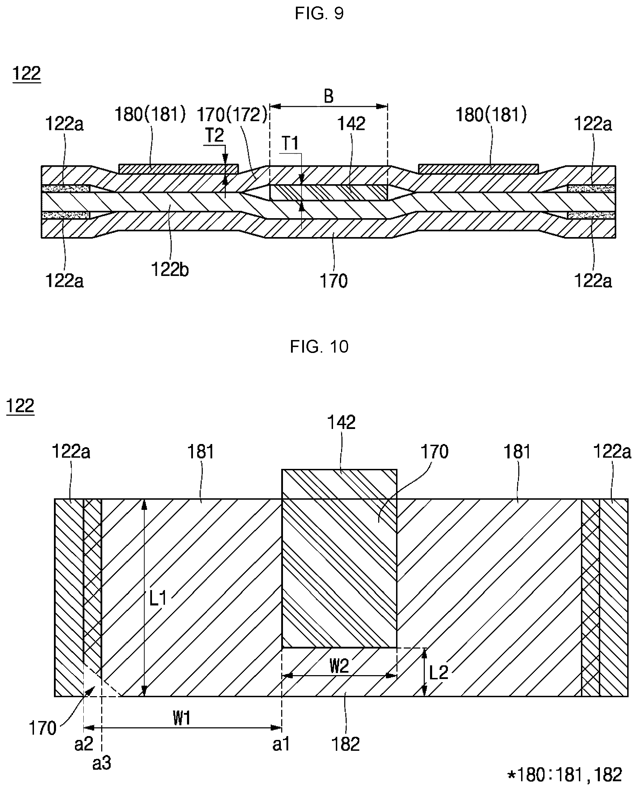

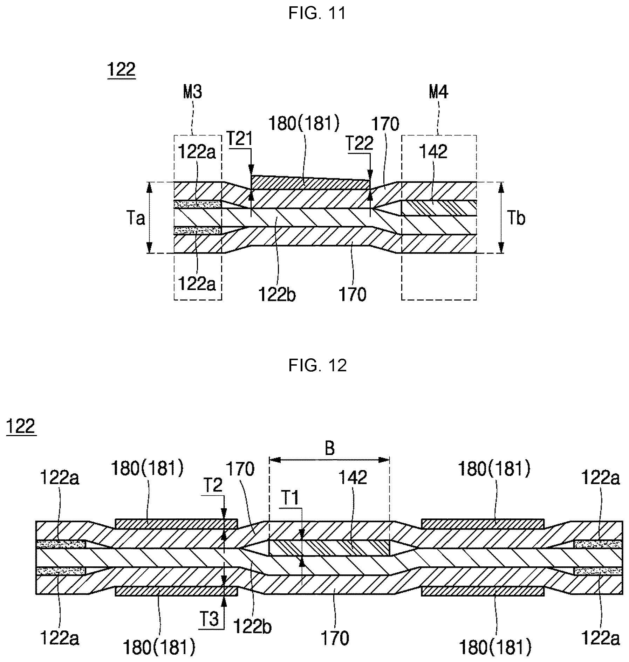

FIG. 9 is a cross-sectional view of a step compensation unit formed on the upper portion of a second electrode plate according to an embodiment of the present disclosure, FIG. 10 is a plan view showing a width and length range of the step compensation unit shown in FIG. 9, FIG. 11 is a cross-sectional view of an embodiment in which the step compensation unit formed on the second electrode plate is formed to have different thicknesses, and FIG. 12 is a cross-sectional view of a step compensation unit formed on the top and bottom of the second electrode plate according to an embodiment of the present disclosure.

As shown in FIG. 9, the step compensation unit 180 may be formed on the upper portion of the insulation tape 170, excluding the region (B) corresponding to the negative electrode tab 142.

For example, as shown in FIG. 10, the step compensation unit 180 may include first step compensation units 181 and a second step compensation unit 182.

The first step compensation units 181 may be formed at both ends of the insulation tape 170 on the upper surface of the insulation tape 170. The second step compensation unit 182 may be formed on a region not corresponding to (e.g., offset from) the negative electrode tab 142 at the region between the first step compensation units 181. Accordingly, in the step compensation unit 180, the first step compensation units 181 formed at both sides of the negative electrode tab 142, and the second step compensation unit 182 connecting (or extending between) the first step compensation units 181 may be integrated (or integrally formed). The step compensation unit 180 may have an approximate "U" shape, but the planar structure of the step compensation unit 180 is not limited to this shape and may be modified into various shapes.

The width (W1) of the first step compensation units 181 may range (or extend or span) from one end a1 of the negative electrode tab 142 to one end a2 of the insulation tape 170. The insulation tape 170 may be formed on the upper surface of the negative electrode plate 122 to cover the negative electrode tab 142, the second electrode uncoated portion 122b, and a portion of the negative electrode active material coated portion 122a. In this way, the width (W1) of the first step compensation units 181 may be limited to a range that reaches (or extends to) the one end a2 of the insulation tape 170 while not overlapping the negative electrode tab 142, but the width (W1) of the first step compensation units 181 may be in a range between the ends a3 of the second electrode uncoated portion 122b while not overlapping the negative electrode tab 142. The length (L1) of the first step compensation units 181 is not limited but may be within the range between the upper and lower ends of the insulation tape 170. The width (W2) of the second step compensation unit 182 may be about the width of the negative electrode tab 142, and the length (L2) of the second step compensation unit 182 may be in the range between the lower end of the negative electrode tab 142 to the lower end of the insulation tape 170.

The step compensation unit 180 compensates for the thickness of a relatively thin portion around the negative electrode tab 142 caused by the negative electrode tab 142, and the upper surface of the step compensation unit 180 may be aligned with the upper surface (A) of the insulation tape 170 corresponding to the positive electrode tab 141 but may be relatively lower or higher than the upper surface (B) of the insulation tape 170. For example, the thickness (T2) of the step compensation unit 180 may be in the range of or about 0.1*T1 ≤ T2 ≤ 1.5*T1, as shown in FIG. 9, where T1 the thickness of the negative electrode tab 142.

When the thickness (T2) of the step compensation unit 180 is excessively thick (exceeding 150% or about 150%) compared to the thickness (T1) of the negative electrode tab 142, cell capacity may be reduced, which may be disadvantageous, and the step compensation unit 180 may impart pressure on a negative electrode substrate. Accordingly, in consideration of the tolerance of the step compensation unit 180, the negative electrode tab 142 may be formed up to 150% or about 150% of the thickness (T1). In some embodiments, when the step compensation unit 180 is thinner than the negative electrode tab 142, there would be no problem, but in order to allow the effect of the step compensation unit 180 to be fully demonstrated, the thickness (T2) of the step compensation unit 180 is at least 10% or about 10% of the thickness (T1) of the negative electrode tab 142.

As shown in FIG. 11, in the negative electrode plate 122, when the thickness (Ta) of a third layer M3 including a negative electrode substrate, the negative electrode active material coated portion 122a, and the insulation tape 170 is different from the thickness (Tb) of a fourth layer M4 including a negative electrode substrate, the negative electrode tab 142, and the insulation tape 170, the step compensation unit 180 may be formed to have a thickness that gradually decreases or increases in the direction from the third layer M3 to the fourth layer M4 so that the cross section thereof may be formed to be inclined.

For example, when the thickness (Ta) of the third layer M3 is greater than the thickness (Tb) of the fourth layer M4, the step compensation unit 180 may be formed to have a thickness that gradually decreases in the direction from the third layer M3 to the fourth layer M4. In the step compensation unit 180 shown in FIG. 11, the thickness (T21) of the left portion thereof is greater than the thickness (T22) of the right portion thereof.

Conversely, when the thickness (Ta) of the third layer M3 is smaller than the thickness (Tb) of the fourth layer M4, the step compensation unit 180 may be formed to have a thickness that gradually increases in the direction from the third layer M3 to the fourth layer M4. In such an embodiment, the thickness (T21) of the left portion of the step compensation unit 180 may be smaller than the thickness (T22) of the right portion thereof.

In some embodiments, as shown in, for example, FIG. 12, the insulation tape 170 may be additionally formed in the same shape, at a position corresponding to the upper surface, on the lower surface of the first electrode uncoated portion 121b, opposite to the upper surface, to which the positive electrode tab 141 is connected. The step compensation unit 180 may also be formed in the same shape on the lower surface of the second electrode uncoated portion 122b at a position corresponding to its position on the upper surface. The total thickness (T2 + T3) of the step compensation unit 180 may be in the range of or about 0.1*T1 ≤ T2 + T3 ≤ 1.5*T1. Here, T1 is the thickness of the negative electrode tab 142, T2 is the thickness of the step compensation unit 180 formed on the upper surface of the second electrode uncoated portion 122b, and T3 is the thickness of the step compensation unit 180 formed on the lower surface of the second electrode uncoated portion 122b.

As described above, in secondary battery according to embodiments of the present disclosure, the pressure applied to an electrode tab is compensated for by attaching a tape having the same thickness as the electrode tab to an electrode uncoated portion (e.g., a portion of the electrode film not coated with an active material) around the electrode tab, thereby reducing or minimizing cracks or ruptures that may occur along the boundary area of an existing electrode tab.

## Claims

1. A secondary battery (100) comprising:
a first electrode plate (121) comprising a first substrate having a first active material coated portion (121a) coated with a first active material and a first electrode uncoated portion (121b) not coated with the first active material;
a second electrode plate (122) comprising a second substrate having a second active material coated portion (122a) coated with a second active material and a second electrode uncoated portion (122b) not coated with the second active material;
a separator (123) between the first electrode plate (121) and the second electrode plate (122);
an electrode tab (141, 142) connected to one of the first electrode uncoated portion (121b) and the second electrode uncoated portion (122b);
an insulation tape (170) on the first electrode uncoated portion (121b) or the second electrode uncoated portion (122b) and covering the electrode tab (141, 142); and
a step compensation unit (180) on a region of an upper surface (A) of the insulation tape (170) excluding a region corresponding to the electrode tab (141, 142).

2. The secondary battery (100) as claimed in claim 1, wherein the step compensation unit (180) comprises first step compensation units (181) at both ends of the insulation tape (170) at the upper surface (A) of the insulation tape (170).

3. The secondary battery (100) as claimed in claim 2, wherein the step compensation unit (180) further comprises a second step compensation unit (182) on a region of the insulation tape (170) between the first step compensation units (181) and that does not correspond to the electrode tab (141, 142).

4. The secondary battery (100) as claimed in claim 3, wherein the first step compensation units (181) are connected to each other with the second step compensation unit (182) therebetween.

5. The secondary battery (100) as claimed in any preceding claim,
wherein a width of the step compensation unit (180) extends from one end (a1) of the electrode tab (141, 142) to one end (a2) of the insulation tape (170).

6. The secondary battery (100) as claimed in claim 5, wherein the insulation tape (170) is on the upper surface of the first electrode plate (121) to cover the electrode tab (141), the first electrode uncoated portion (121b), and a portion of the first active material coated portion (121a) or is on the upper surface of the second electrode plate (122) to cover the electrode tab (142), the second electrode uncoated portion (122b), and a portion of the second active material coated portion (122a).

7. The secondary battery (100) as claimed in any preceding claim,
wherein a thickness T₂ of the step compensation unit (180) is in a range of 0.1*T₁ ≤ T₂ ≤ 1.5*T₁, where T₁ is a thickness of the electrode tab (141).

8. The secondary battery (100) as claimed in any preceding claim,
wherein:
when a thickness (Ta) of a first layer (M1) comprising the first substrate, the first active material coated portion (121a), and the insulation tape (170) is different from a thickness (Tb) of a second layer (M2) comprising the first substrate, the electrode tab (141), and the insulation tape (170), the step compensation unit (180) has a thickness that gradually decreases or increases in a direction from the first layer (M1) to the second layer (M2); or
in the second electrode plate (122), when a thickness of a third layer (M3) comprising the second substrate, the second active material coated portion (122a), and the insulation tape (170) is different from a thickness of a fourth layer (M4) comprising the second substrate, the electrode tab (142), and the insulation tape (170), the step compensation unit (180) has a thickness that gradually decreases or increases in a direction from the third layer (M3) to the fourth layer (M4).

9. The secondary battery (100) as claimed in any preceding claim,
wherein:
the insulation tape (170) is additionally arranged in the same shape on a lower surface opposite to the upper surface of the first electrode uncoated portion (121b) or the second electrode uncoated portion (122b) to which the electrode tab (141, 142) is connected at a position corresponding to the upper surface; and
the step compensation unit (180) is additionally arranged in the same shape on a lower surface of the first electrode uncoated portion (121b) or the second electrode uncoated portion (122b) at a position corresponding to the upper surface.

10. The secondary battery (100) as claimed in claim 9, wherein a total thickness (T₂ + T₃) of the step compensation unit (180) is in a range of 0.1*T₁ ≤ T₂ + T₃ ≤ 1.5*T₁, where T₁ is a thickness of the electrode tab (141), T₂ is a thickness of the step compensation unit (180) on the upper surface of the first electrode uncoated portion (121b) or the second electrode uncoated portion (122b), and T₃ is a thickness of the step compensation unit (180) on the lower surface of the first electrode uncoated portion (121b) or the second electrode uncoated portion (122b).

11. The secondary battery (100) as claimed in claim 1, wherein the step compensation unit (180) comprises an adhesive tape comprising a film (F) and an adhesive layer (P) on a lower surface of the film (F).

12. The secondary battery (100) as claimed in claim 11, wherein the film (F) comprises polyimide (PI), polyethylene terephthalate (PET), or polypropylene (PP), and the adhesive layer (P) comprises at least one of an acrylic compound, a rubber compound, or a hydrocarbon resin compound.

## Patentansprüche

1. Sekundärbatterie (100), umfassend:
eine erste Elektrodenplatte (121), umfassend ein erstes Substrat, das einen ersten aktivmaterialbeschichteten Abschnitt (121a), der mit einem ersten aktiven Material beschichtet ist, und einen ersten unbeschichteten Elektrodenabschnitt (121b), der nicht mit dem ersten aktiven Material beschichtet ist aufweist;
eine zweite Elektrodenplatte (122), umfassend ein zweites Substrat, das einen zweiten aktivmaterialbeschichteten Abschnitt (122a), der mit einem zweiten aktiven Material beschichtet ist, und einen zweiten unbeschichteten Elektrodenabschnitt (122b), der nicht mit dem zweiten aktiven Material beschichtet ist, aufweist;
einen Separator (123) zwischen der ersten Elektrodenplatte (121) und der zweiten Elektrodenplatte (122);
eine Elektrodenlasche (141, 142), die mit einem von dem ersten unbeschichteten Elektrodenabschnitt (121b) und dem zweiten unbeschichteten Elektrodenabschnitt (122b) verbunden ist;
ein Isolierband (170) auf dem ersten unbeschichteten Elektrodenabschnitt (121b) oder dem zweiten unbeschichteten Elektrodenabschnitt (122b), das die Elektrodenlasche (141, 142) abdeckt; und
eine Stufenkompensationseinheit (180) auf einem Bereich einer Oberseite (A) des Isolierbandes (170), mit Ausnahme eines Bereichs, welcher der Elektrodenlasche (141, 142) entspricht.

2. Sekundärbatterie (100) nach Anspruch 1, wobei die Stufenkompensationseinheit (180) erste Stufenkompensationseinheiten (181) an beiden Enden des Isolierbandes (170) an der Oberseite (A) des Isolierbandes (170) umfasst.

3. Sekundärbatterie (100) nach Anspruch 2, wobei die Stufenkompensationseinheit (180) weiter eine zweite Stufenkompensationseinheit (182) auf einem Bereich des Isolierbandes (170) zwischen den ersten Stufenkompensationseinheiten (181), und der nicht der Elektrodenlasche (141, 142) entspricht, umfasst.

4. Sekundärbatterie (100) nach Anspruch 3, wobei die ersten Stufenkompensationseinheiten (181) miteinander verbunden sind, wobei sich die zweite Stufenkompensationseinheit (182) dazwischen befindet.

5. Sekundärbatterie (100) nach einem vorstehenden Anspruch, wobei sich eine Breite der Stufenkompensationseinheit (180) von einem Ende (a1) der Elektrodenlasche (141, 142) zu einem Ende (a2) des Isolierbandes (170) erstreckt.

6. Sekundärbatterie (100) nach Anspruch 5, wobei sich das Isolierband (170) auf der Oberseite der ersten Elektrodenplatte (121) befindet, um die Elektrodenlasche (141), den ersten unbeschichteten Elektrodenabschnitt (121b) und einen Abschnitt des ersten aktivmaterialbeschichteten Abschnitts (121a) abzudecken, oder sich auf der Oberseite der zweiten Elektrodenplatte (122) befindet, um die Elektrodenlasche (142), den zweiten unbeschichteten Elektrodenabschnitt (122b) und einen Abschnitt des zweiten aktivmaterialbeschichteten Abschnitts (122a) abzudecken.

7. Sekundärbatterie (100) nach einem vorstehenden Anspruch, wobei eine Dicke T₂ der Stufenkompensationseinheit (180) in einem Bereich von 0,1*T₁ ≤ T₂ ≤ 1,5*T₁ liegt, wobei T₁ eine Dicke der Elektrodenlasche (141) ist.

8. Sekundärbatterie (100) nach einem vorstehenden Anspruch, wobei:
wenn sich eine Dicke (Ta) einer ersten Schicht (M1), die das erste Substrat, den ersten aktivmaterialbeschichteten Abschnitt (121a) und das Isolierband (170) umfasst, von einer Dicke (Tb) einer zweiten Schicht (M2), die das erste Substrat, die Elektrodenlasche (141) und das Isolierband (170) umfasst, unterscheidet, die Stufenkompensationseinheit (180) eine Dicke aufweist, die in einer Richtung von der ersten Schicht (M1) zur zweiten Schicht (M2) allmählich abnimmt oder zunimmt; oder,
wenn sich in der zweiten Elektrodenplatte (122) eine Dicke einer dritten Schicht (M3), die das zweite Substrat, den zweiten aktivmaterialbeschichteten Abschnitt (122a) und das Isolierband (170) umfasst, von einer Dicke einer vierten Schicht (M4), die das zweite Substrat, die Elektrodenlasche (142) und das Isolierband (170) umfasst, unterscheidet, die Stufenkompensationseinheit (180) eine Dicke aufweist, die in einer Richtung von der dritten Schicht (M3) zur vierten Schicht (M4) allmählich abnimmt oder zunimmt.

9. Sekundärbatterie (100) nach einem vorstehenden Anspruch, wobei:
das Isolierband (170) zusätzlich in gleicher Form auf einer Unterseite angeordnet ist, die der Oberseite des ersten unbeschichteten Elektrodenabschnitts (121b) oder des zweiten unbeschichteten Elektrodenabschnitts (122b) gegenüberliegt, mit dem die Elektrodenlasche (141, 142) an einer der Oberseite entsprechenden Position verbunden ist; und
die Stufenkompensationseinheit (180) zusätzlich in gleicher Form auf einer Unterseite des ersten unbeschichteten Elektrodenabschnitts (121b) oder des zweiten unbeschichteten Elektrodenabschnitts (122b) an einer der Oberseite entsprechenden Position angeordnet ist.

10. Sekundärbatterie (100) nach Anspruch 9, wobei eine Gesamtdicke (T₂ + T₃) der Stufenkompensationseinheit (180) in einem Bereich von 0,1*T₁ ≤ T₂ + T₃ < 1,5*T₁ liegt, wobei T₁ eine Dicke der Elektrodenlasche (141), T₂ eine Dicke der Stufenkompensationseinheit (180) auf der Oberseite des ersten unbeschichteten Elektrodenabschnitts (121b) oder des zweiten unbeschichteten Elektrodenabschnitts (122b) ist und T₃ eine Dicke der Stufenkompensationseinheit (180) auf der Unterseite des ersten unbeschichteten Elektrodenabschnitts (121b) oder des zweiten unbeschichteten Elektrodenabschnitts (122b) ist.

11. Sekundärbatterie (100) nach Anspruch 1, wobei die Stufenkompensationseinheit (180) ein Klebeband umfasst, das eine Folie (F) und eine Klebeschicht (P) auf einer Unterseite der Folie (F) umfasst.

12. Sekundärbatterie (100) nach Anspruch 11, wobei die Folie (F) Polyimid (PI), Polyethylenterephthalat (PET) oder Polypropylen (PP) umfasst und die Klebeschicht (P) mindestens eines von einer Acrylverbindung, einer Gummiverbindung oder einer Kohlenwasserstoffharzverbindung umfasst.

## Revendications

1. Batterie secondaire (100) comprenant :
une première plaque d'électrode (121) comprenant un premier substrat présentant une première partie revêtue de matériau actif (121a) revêtue d'un premier matériau actif et une première partie non revêtue d'électrode (121b) non revêtue du premier matériau actif ;
une seconde plaque d'électrode (122) comprenant un second substrat présentant une seconde partie revêtue de matériau actif (122a) revêtue d'un second matériau actif et une seconde partie non revêtue d'électrode (122b) non revêtue du second matériau actif ;
un séparateur (123) entre la première plaque d'électrode (121) et la seconde plaque d'électrode (122) ;
une languette d'électrode (141, 142) reliée à l'une de la première partie non revêtue d'électrode (121b) et de la seconde partie non revêtue d'électrode (122b) ;
un ruban isolant (170) sur la première partie non revêtue d'électrode (121b) ou sur la seconde partie non revêtue d'électrode (122b) et recouvrant la languette d'électrode (141, 142) ; et
une unité de compensation progressive (180) sur une région d'une surface supérieure (A) du ruban isolant (170) excluant une région correspondant à la languette d'électrode (141, 142).

2. Batterie secondaire (100) selon la revendication 1, dans laquelle l'unité de compensation progressive (180) comprend des premières unités de compensation progressive (181) aux deux extrémités du ruban isolant (170) sur la surface supérieure (A) du ruban isolant (170).

3. Batterie secondaire (100) selon la revendication 2, dans laquelle l'unité de compensation progressive (180) comprend en outre une seconde unité de compensation progressive (182) sur une région du ruban isolant (170) entre les premières unités de compensation progressive (181) et qui ne correspond pas à la languette d'électrode (141, 142).

4. Batterie secondaire (100) selon la revendication 3, dans laquelle les premières unités de compensation progressive (181) sont reliées entre elles avec la seconde unité de compensation progressive (182) entre elles.

5. Batterie secondaire (100) selon une quelconque revendication précédente, dans laquelle une largeur de l'unité de compensation progressive (180) s'étend d'une extrémité (a1) de la languette d'électrode (141, 142) à une extrémité (a2) du ruban isolant (170).

6. Batterie secondaire (100) selon la revendication 5, dans laquelle le ruban isolant (170) se trouve sur la surface supérieure de la première plaque d'électrode (121) pour recouvrir la languette d'électrode (141), la première partie non revêtue d'électrode (121b) et une partie de la première partie revêtue de matériau actif (121a), ou se trouve sur la surface supérieure de la seconde plaque d'électrode (122) pour recouvrir la languette d'électrode (142), la seconde partie non revêtue d'électrode (122b) et une partie de la seconde partie revêtue de matériau actif (122a).

7. Batterie secondaire (100) selon une quelconque revendication précédente, dans laquelle une épaisseur T₂ de l'unité de compensation progressive (180) est dans une plage de 0,1*T₁ ≤ T₂ ≤ 1,5*T₁, où T₁ est une épaisseur de la languette d'électrode (141).

8. Batterie secondaire (100) selon une quelconque revendication précédente, dans laquelle :
lorsqu'une épaisseur (Ta) d'une première couche (M1) comprenant le premier substrat, la première partie revêtue de matériau actif (121a) et le ruban isolant (170) est différente d'une épaisseur (Tb) d'une deuxième couche (M2) comprenant le premier substrat, la languette d'électrode (141) et le ruban isolant (170), l'unité de compensation progressive (180) présente une épaisseur qui diminue ou augmente progressivement dans une direction allant de la première couche (M1) à la deuxième couche (M2) ; ou
dans la seconde plaque d'électrode (122), lorsqu'une épaisseur d'une troisième couche (M3) comprenant le second substrat, la seconde partie revêtue de matériau actif (122a) et le ruban isolant (170) est différente d'une épaisseur d'une quatrième couche (M4) comprenant le second substrat, la languette d'électrode (142) et le ruban isolant (170), l'unité de compensation progressive (180) présente une épaisseur qui diminue ou augmente progressivement dans une direction allant de la troisième couche (M3) à la quatrième couche (M4).

9. Batterie secondaire (100) selon une quelconque revendication précédente, dans laquelle :
le ruban isolant (170) est en outre agencé dans la même forme sur une surface inférieure opposée à la surface supérieure de la première partie non revêtue d'électrode (121b) ou de la seconde partie non revêtue d'électrode (122b) à laquelle la languette d'électrode (141, 142) est reliée à une position correspondant à la surface supérieure ; et
l'unité de compensation progressive (180) est en outre agencée dans la même forme sur une surface inférieure de la première partie non revêtue d'électrode (121b) ou de la seconde partie non revêtue d'électrode (122b) à une position correspondant à la surface supérieure.

10. Batterie secondaire (100) selon la revendication 9, dans laquelle une épaisseur totale (T₂ + T₃) de l'unité de compensation progressive (180) se situe dans une plage de 0,1*T₁ ≤ T₂ + T₃ < 1,5*T₁, où T₁ est une épaisseur de la languette d'électrode (141), T₂ est une épaisseur de l'unité de compensation progressive (180) sur la surface supérieure de la première partie non revêtue d'électrode (121b) ou de la seconde partie non revêtue d'électrode (122b), et T₃ est une épaisseur de l'unité de compensation progressive (180) sur la surface inférieure de la première partie non revêtue d'électrode (121b) ou de la seconde partie non revêtue d'électrode (122b).

11. Batterie secondaire (100) selon la revendication 1, dans laquelle l'unité de compensation progressive (180) comprend un ruban adhésif comprenant un film (F) et une couche adhésive (P) sur une surface inférieure du film (F).

12. Batterie secondaire (100) selon la revendication 11, dans laquelle le film (F) comprend du polyimide (PI), du polyéthylène téréphtalate (PET) ou du polypropylène (PP), et la couche adhésive (P) comprend au moins un parmi un composé acrylique, un composé de caoutchouc ou un composé de résine hydrocarbonée.
